# EUROPEAN PATENT SPECIFICATION

(11) **EP 2 998 177 B1**
(45) Date of publication and mention of the grant of the patent: **01.05.2019**
(21) Application number: 14185637.7
(22) Date of filing: 19.09.2014
(51) Int. Cl.: B60T 13/68, B60T 13/26, B60T 15/04, B60T 13/36

(54) **Apparatus for controlling a pneumatic park brake actuation**
Vorrichtung zur Ansteuerung einer pneumatischen Feststellbremsenbetätigung
Appareil de commande d'un actionnement du frein de stationnement pneumatique

(43) Date of publication of application: 23.03.2016
(73) Proprietor: KNORR-BREMSE Systeme für Nutzfahrzeuge GmbH, 80809 München (DE)
(72) Inventor: Nemeth, Huba, 1116 Budapest (HU); Frank, Peter, 1112 Budapest (HU); Szell, Peter, 1163 Budapest (HU)

(56) References cited:
- EP-A1- 2 055 542
- EP-A1- 2 133 250
- EP-A1- 2 199 162
- EP-A1- 2 615 003
- WO-A2-2009/098003
- DE-A1-102005 058 799
- DE-A1-102007 008 504
- DE-A1-102008 014 458
- DE-A1-102011 011 628
- DE-A1-102011 016 740
- DE-A1-102012 105 136

## Description

The present invention relates to an apparatus for controlling a pneumatic park brake actuation of a vehicle and, in particular, to a dual operation mode for a parking brake of commercial vehicles.

### Background

In commercial vehicles a parking brake system based on compressed air is often provided to supplement a compressed air operating service brake. The pneumatic park brake actuation in such parking brake systems is typically electronically controlled and includes a bistable control function to be able to fulfill legal regulations (for example ECE R13). This bistable control function enables one stable driving position after the park brake was released and another stable position to maintain a parked position after the park brake was activated.

DE 10 2012 105 136 A1 discloses a conventional parking brake system of a type depicted in Fig. 9. The parking brake system comprises a pressure supply terminal 1 to supply pressured air from a compressor, which is protected by a non-return valve (e.g. a ball check valve), which maintain a predetermined pressure when the system is exhausted.

In addition, the system comprises two trailer control lines, the trailer control line 29.1 used for systems, where the trailer is not braked during locked park brake position, and the further line 29.2 used for systems, where the trailer is also braked during locked park brake position. The system further includes a service brake terminal 4.2 connectable to a service brake of the vehicle, a spring brake terminal 28 connectable to a spring brake cylinder of the vehicle, and a control unit 10 configured to provide signals to control valves of the parking brake system to ensure a desired operation mode of the vehicle as explained in more detail in the following.

The parking brake system further comprises a valve unit 3, a bistable valve 5 (with a first terminal 5a, a second terminal 5b and a third terminal 5c), a controllable valve unit 7', a select high valve 8, a relay valve unit 9, and a normally open valve unit 12.

The valve unit 3 comprises a load valve 3a and an exhaust valve 3b. The load valve 3a is configured, upon receiving an exhaust signal from the control unit 10, to disconnect the pressure supply terminal 1 from the first terminal 5a. The exhaust valve 3b is configured, upon reception of the exhaust signal from the control unit 10, to connect the first terminal 5a with a pressure sink 20 (e.g. provided by the surrounding air reservoir or any kind of exhaust port).

The bistable valve 5 can be switched in a first stable position, where the first terminal 5a is connected to the third terminal 5c and a second stable position, where the second terminal 5b is connected to the third terminal 5c. The third terminal is connected to the pressure sink 20. The first terminal 5a is connected with the trailer control line 29.1.

The select high valve 8 is arranged between the third terminal 5c and the service brake terminal 4.2 and comprises an outlet and is operable to provide to the outlet selectively pressured air from the third terminal 5c (over line 6) or pressurized air from the service brake terminal 4.2 dependent upon which of the pressured air comprises a higher air pressure.

The normally open valve 12 is provided between the third terminal 5c and the select high valve 8 and is configured to be normally open, but closes upon receiving a respective signal from the control unit 10.

The relay valve unit 9 provides an air connection (over line 2) between the pressure supply terminal 1 and the spring brake terminal 28 and comprises a control inlet which is connected to the outlet of the select high valve 8. The relay valve unit 9 is configured to modulate an air pressure supplied to the spring brake terminal 28 depending on an air pressure present at the control inlet.

The controllable valve unit 7' comprises a 3/2 valve 7.1' and a further select high valve 7.2'. The 3/2 valve 7.1' comprises a first terminal 7.11' connected to the first terminal 5a of the bistable valve 5, a second terminal 7.12' connected to the pressure sink 20, a third terminal 7.13' connected to an inlet 7.21' of the further select high valve 7.2'. The further select high valve 7.2' comprises a further inlet 7.22', which is connected to the third terminal 5c via the normally open valve 12, and an outlet 7.23' connected to the trailer control line 29.2. The controllable valve unit 7' is operable, in a first mode, to provide an air pressure to the trailer control line 29.2, which is the larger one of an air pressure at the first terminal 5a and an air pressure at the third terminal 5c. In a second mode of operation, the controllable valve unit 7' provides the pressure of the third terminal 5c to the trailer control line 29.2 independently of the air pressure at the first terminal of the bistable valve 5.

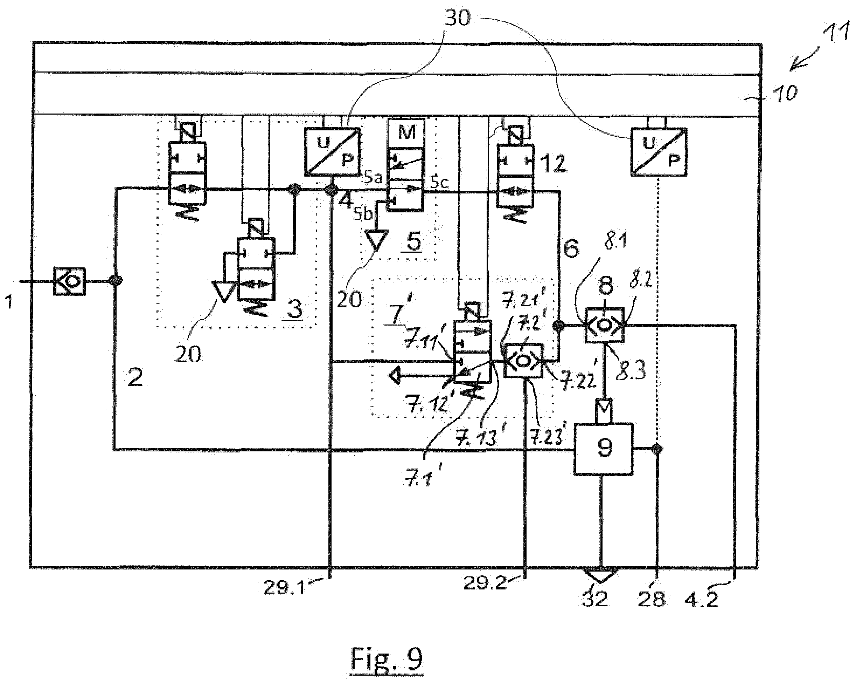

Finally, the parking brake system of Fig. 9 comprises two pressure sensor units 30 which are configured to measure the pressure at the first terminal 5a and/or the pressure at the spring brake terminal 28. A vent 32 is provided which is connected to the relay valve unit 9 to provide a venting.

The normally open valve 12 is employed for the so-called stretch brake function which let to control the trailer control line 29.1 while keeping the pressure in control line 6, when the trailer is braked and the vehicle (e.g. a truck) is unbraked at the same time, in order to stabilize the vehicle/trailer combination (for example, to prevent a jack-knife situation).

Conventional compressed air service brake systems of commercial vehicles may be operated electronically in a way that the driver can be omitted from the control loop. Such brake-by-wires systems may have pneumatic redundancies, but they have only a single electronic control circuit. In order to operate the vehicle in the above-mentioned automatic way, a pneumatic backup circuit is no longer useful, since the driver is not able to operate the pneumatic redundant circuits. Consequently, appropriate electric redundancies have to be added to operate the systems in a fault-tolerant way.

The system of Fig. 9 allows an operation in an automatic parking operation mode with the following method: If the parking brake is released in case of an automatic operation, line 6 is pressurized by the load valve 3a by switching the 3/2 bistable valve 5 to its connected position (upper position). Before the vehicle starts, the normally open valve 12 is activated (closess line 6) and then the 3/2 bistable valve 5 is switched to its exhaust position (lower position). If the vehicle starts in this operation mode and a malfunction occurs (e.g. electric supply breakdown), the normally open valve 12 is released and the 3/2 bistable valve 5 exhausts line 6 so that the park braking actuator results in a stable parking position.

However, this operation mode of the system of Fig. 9 has the disadvantage that during the autonomous driving the control line 6 has no continuous pressure supply, which may result in unintentional activation of the parking brake. For example, in real systems it happens frequently that control line 6 may have a leakage. Therefore, advanced, more complex constructions are needed to secure complete tightness of the control line 6. This, however, is very costly, because it would involve several components (the normally open valve 12, the select high valve 8, and the valve unit 7).

Therefore, there is a demand for an apparatus for controlling a pneumatic park brake actuation of a vehicle using standard components in a way that can achieve an automatic parking function. Such secure parking brake systems should provide a safe state if malfunctions are encountered, for example, for low speed or for closed track autonomous maneuvers with or without trailers.

### Summary of the Invention

The present invention relates to an apparatus for controlling a pneumatic park brake actuation according to claims 1 or 5.

The dependent claims refer to specifically advantageous realizations of the subject matter of the independent claims.

The present invention relates to an apparatus for controlling a pneumatic park brake actuation of a vehicle operable to tow a trailer. The apparatus comprises a pressure supply terminal to supply pressured air, a trailer control line, a control unit, a bistable valve, and a valve unit. The trailer control line is configured to provide pressured air for a trailer control valve of the vehicle. The control unit is configured to provide an autonomous operation signal indicating a desired autonomous operation mode of the vehicle (autonomous vehicle operation mode). The bistable valve includes a first terminal, a second terminal and a third terminal, wherein the third terminal is connectable to the trailer control line. The bistable valve is switchable between a first stable position, where the first terminal is connected with the third terminal and in a second stable position, where the second terminal is connected with the third terminal. The valve unit is coupled to the bistable valve, to a pressure sink and to the pressure supply terminal. The valve unit is configured to receive the autonomous operation signal and is operable to connect the first terminal with the pressure supply terminal. The valve unit is further operable to connect the second terminal with a pressure sink, when no autonomous operation signal is received, and, upon reception of the autonomous operation signal, to interrupt the connection between the second terminal and the pressure sink.

The present invention solves the above-mentioned problems by avoiding any additional components between the bistable valve and the select high valve 8 or the valve unit 7 and preferably provides an active air support for a connection line 6 toward to relay valve 9 and the trailer control line 29.2 to maintain the air pressure on these lines and thus a driving condition even for longer operation. This cannot be achieved by the conventional system as depicted in Fig. 9.

The presence/absence of the autonomous operation signal should be understood in very broad terms. In particular, the absence or the vanishing of the autonomous operation signal may also signal an error or malfunctioning of any component of the braking system and thus can be understood as an error signal. In other words, the autonomous signal should be understood in that it is indicative not only of the desire of the operator (e.g. the driver) to operate the vehicle in autonomous mode, but may also be indicative of the correct operation to of the relevant components (e.g. the control unit, power supply). The absence of the autonomous signal or the error signal can be any signal suitable to indicate the malfunction (or failure). For example, the autonomous signal may be a constant voltage signal and a drop in the voltage may indicate a malfunction (e.g. a power failure) and represent thus an error signal. Other examples for the autonomous signal include a voltage pulse or any change in a frequency or amplitude of a transmitted signal.

Optionally, the valve unit may comprise an activation valve with a first terminal connected to the pressure supply terminal, a second terminal connected to the pressure sink and a third terminal connected to the second terminal of the bistable valve. The activation valve may be operable to connect its third terminal to its second terminal, when no autonomous operation signal is received, and/or, upon reception of the autonomous operation signal, to connect its first terminal with its third terminal.

Therefore, a constant pressured air supply is provided for the relay valve 9 and trailer control line 29.2 and thus even if the control line 6 (see Fig. 9) would have a leak, the system still remains operable. No unintentional braking will occur.

Optionally, the valve unit may comprise an activation valve arranged between the second terminal of the bistable valve and the pressure sink. The activation valve may be operable to connect the pressure sink with the second terminal of the bistable valve, when no autonomous operation signal is received, and/or, upon reception of the autonomous operation signal, to disconnect the second terminal of the bistable valve from the pressure sink.

Optionally, the valve unit further comprises a pressure supply valve arranged between the second terminal of the bistable valve and the pressure supply terminal. The pressure supply valve may be operable, upon reception of the autonomous operation signal, to connect the pressure supply terminal with the second terminal, and/or, when no autonomous operation signal is received, to disconnect the second terminal of the bistable valve from the pressure supply terminal.

Hence, these embodiments provide equivalent realizations for a constant pressured air supply provided for the trailer control line, which maintains an operational state of the system even if the control line 6 (see Fig. 9) would have a leak.

The present invention relates also to an apparatus for controlling a pneumatic park brake actuation of a vehicle, which is suitable to tow a trailer, wherein the apparatus comprises: a pressure supply terminal to supply pressured air, a trailer control line, a control unit, a bistable valve, and a valve unit. The trailer control line is configured to provide pressured air for a trailer braking unit of the vehicle. The control unit is configured to provide an autonomous operation signal indicating a desired autonomous operation mode of the vehicle. The bistable valve includes a first terminal, a second terminal connected to a pressure sink and a third terminal. The third terminal is connectable to the control line 6 (see Fig. 9). The bistable valve is switchable in a first stable position, where the first terminal is connected with the third terminal, and in a second stable position, where the second terminal is connected with the third terminal. The valve unit is coupled to the bistable valve, to the pressure sink and to the pressure supply terminal. The valve unit is configured to receive the autonomous operation signal. The valve unit is further operable, upon reception of the autonomous operation signal, to establish a connection between the first terminal of the bistable valve and the pressure supply terminal and, if no autonomous operation signal is received, to connect the first terminal with the pressure sink. The valve unit comprises a mode selection valve and/or an activation valve connected via a connection line. The mode selection valve is operable, in a first mode, to connect the first terminal of the bistable valve with the pressure supply terminal and/or, in a second mode, to connect the first terminal of the bistable valve with the connection line. The activation valve is operable, if no autonomous operation signal is received, to connect the connection line with the pressure sink and/or, upon reception of the autonomous signal, to disconnect the connection line from the pressure sink.

This embodiment provides a further realization for a constant pressured air supply provided for the control line, which maintains an operational state of the system even if the control line 6 (see Fig. 9) would have a leak.

Optionally, the valve unit may further comprise a pressure supply valve arranged between the connection line and/or the pressure supply terminal. The pressure supply valve may be operable, upon receiving the autonomous operation signal, to connect the pressure supply terminal with the connection line, and/or, when no autonomous operation signal is received, to disconnect the connection line from the pressure supply terminal. Optionally, the valve unit may further comprise a load valve and/or an exhaust valve, the control unit being operable to provide an exhaust signal for exhausting the bistable valve. The load valve may be operable, upon reception of the exhaust signal, to disconnect the pressure supply terminal from the first terminal of the bistable valve. The exhaust valve may be operable, upon reception of the exhaust signal, to connect the first terminal of the bistable valve with the pressure sink.

Hence, this embodiment provides an equivalent realization for a constant pressured air supply provided for the control line, which maintains an operational state of the system even if the control line 6 (see Fig. 9) would have a leak.

Optionally, the apparatus may further comprise a further trailer control line, the further trailer control line may be connected to the first terminal of the bistable valve.

Optionally, the apparatus may further comprises at least one of the following: a select high valve, a relay valve unit, a spring brake terminal connectable to a spring brake cylinder of the vehicle, and a service brake terminal connectable to a service brake of the vehicle. The select high valve may be arranged between the third terminal of the bistable valve and the service brake terminal. The select high valve may comprise an outlet and may be operable to provide to the outlet selectively pressured air from the third terminal of the bistable valve or pressured air from the service brake terminal dependent upon which of the pressured air comprises a higher air pressure. The relay valve unit may provide an air connection between the pressure supply terminal and/or the spring brake terminal and comprising a control inlet. The control inlet may be connected to the outlet of the select high valve. The relay valve unit may be operable to modulate an air pressure supplied to the spring brake terminal depending on an air pressure present at the control inlet.

Optionally, the apparatus may further comprise a controllable valve unit with a first terminal being connected to the first terminal of the bistable valve and/or a second terminal being connected to the pressure sink and/or a third terminal being connected to the third terminal of the bistable valve and/or a fourth terminal being connected to the control line. The controllable valve unit may be operable, in a first mode, to provide an air pressure at the control line, which is a larger one of an air pressure at the first terminal and an air pressure at the third terminal. Optionally, in a second mode of operation, the controllable valve unit may be operable to provide the pressure of the third terminal of the bistable valve to the control line independently of the air pressure at the first terminal of the bistable valve. The control unit may be configured to control the first mode and the second mode.

Optionally, the apparatus may further comprise at least one pressure sensor unit, wherein the at least one pressure sensor unit may be operable to measure a pressure at the first terminal of the bistable valve and/or to measure a pressure at the second terminal of the relay valve unit.

The pressure sink may be an exhaust port providing a connection to the surrounding air. Optionally, in the bistable valve and/or the mode selection valve are: electromagnetically controlled valve (e.g. a solenoid) and/or an electromechanically controlled valve (e.g. including an electric motor) and/or a pneumatically controlled valve. The control unit may be configured to control the bistable valve and/or the mode selection valve.

The present invention relates also to a parking brake system of a commercial vehicle with an apparatus as described before.

It should be understood that the control unit may be configured to issue to autonomous operation signal at the same time to the various valves defined to receive this signal. It may also be of advantage to set certain time delays with respect to the various valves. Therefore, the actuation of the various valves may happen simultaneously or subsequently. In addition, it should be understood, if no signal (e.g. the autonomous operation signal and/or the exhaust signal) is present at the various valves, the various valves may go automatically (e.g. implemented by a spring) in the positions defined without signals being present. This default position may be the exhaust position. Only the bistable valves may be configured to remain in their last position for as long as they receive a new signal.

### Brief Description of the Drawings

Some examples of the apparatuses and/or methods will be described in the following by way of examples only, and with respect to the accompanying drawings, in which:
Figs. 1A, B depict an apparatuses for controlling a pneumatic park brake actuation according to embodiments of the present invention;
Fig. 2 depicts a further embodiment for a controlled park brake actuation system;
Fig. 3 depicts yet another embodiment for a controlled park brake actuation system;
Fig. 4 depicts yet another embodiment for a controlled park brake actuation system;
Fig. 5 depicts yet another embodiment for a controlled park brake actuation system;
Fig. 6 depicts yet another embodiment for a controlled park brake actuation system;
Fig. 7 depicts yet another embodiment for a controlled park brake actuation system;
Fig. 8. depicts a flow chart of a method according to an embodiments of the present invention; and
Fig. 9 depicts a conventional a controlled park brake actuation system.

### Detailed Description

While embodiments are capable of various modifications and alternative forms, the illustrative embodiments in the figures will herein be described in detail. It should be understood, however, that there is no intent to limit embodiments to the particular forms disclosed, but on the contrary, embodiments are to cover all modifications, equivalents, and alternatives falling within the scope of the disclosure. Like numbers refer to like or similar elements throughout the description of the figures and a repetition of the corresponding description is omitted.

Embodiments of the present invention are based on the fact that automated and fully automatic vehicles need an increased level of reliability especially for safety critical systems like the braking. Therefore, such systems require appropriate redundancies to be able to fulfill automated drive operations where the driver is not able to interfere with the vehicle to recover a control within a specified time or in case of a fully automated drive, when no driver is present to carry out the operation.

For example, for low-speed automated vehicle operations on closed tracks (e.g. cargo yards) a fixed parked state can be a satisfactory safe state if a malfunction occurs. Therefore, the gradual parking functionality of the service brake and redundant electronic control architectures can be avoided if the park brake can provide a safe parking function in any case of any malfunctioning occurs.

Embodiments of the present invention provide such safe parking function as it will be described in detail in the following.

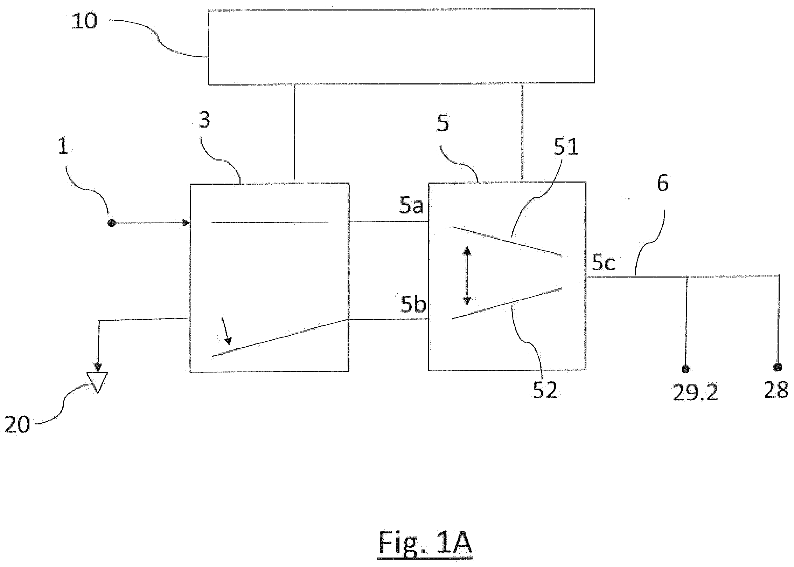

Fig. 1A depicts an apparatus for controlling a pneumatic park brake actuation of a vehicle operable to tow a trailer. The apparatus comprises a pressure supply terminal 1 to supply pressured air, parking brake control line 28, a trailer control line 29.2, a control unit 10, a bistable valve 5, and a valve unit 3. The trailer control line 29.2 is configured to provide pressured air for a trailer braking unit of the vehicle. The control unit 10 is configured to provide an autonomous operation signal indicating a desired autonomous operation mode of the vehicle.

The bistable valve 5 comprises a first terminal 5a, a second terminal 5b, and a third terminal 5c. The third terminal 5c is connected to a control line 6 coupled to the parking brake control line 28 and to the trailer control line 29.2. The bistable valve 5 is switchable in a first stable position 51 where the first terminal 5a is connected with the third terminal 5c, and in a second stable position 52, where the second terminal 5b is connected with the third terminal 5c.

The valve unit 3 is coupled to the bistable valve 5, to a pressure sink 20 and to the pressure supply terminal 1, and is configured to receive the autonomous operation signal. The valve unit 3 is further operable to connect the first terminal 5a with the pressure supply terminal 1, to connect the second terminal 5b with a pressure sink 20, when no autonomous operation signal is received, and, upon reception of the autonomous operation signal, to interrupt the connection between the second terminal 5b and the pressure sink 20.

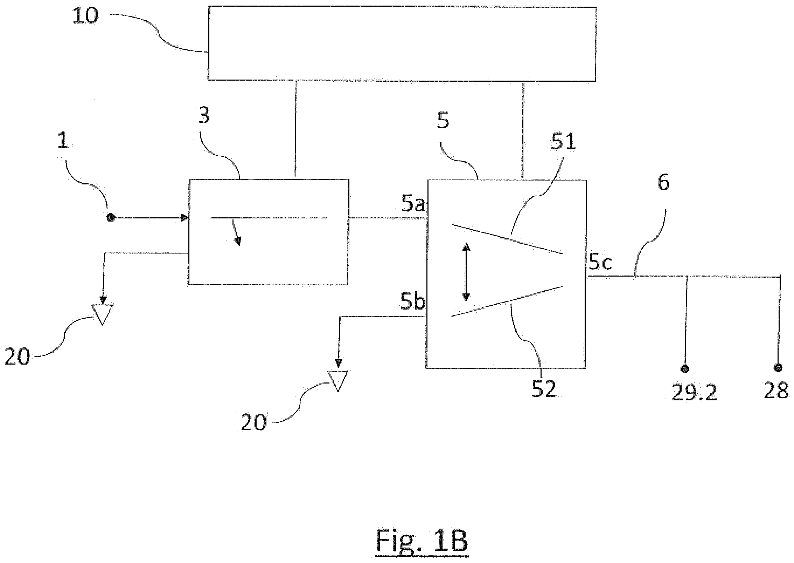

Fig. 1B depicts a further apparatus for controlling a pneumatic park brake actuation of a vehicle operable to tow a trailer. The further apparatus comprises also a pressure supply terminal 1 to supply pressured air, parking brake control line 28, a trailer control line 29.2, a control unit 10, a bistable valve 5, a valve unit 3. The trailer control line 29.2 is configured to provide pressured air for a trailer braking unit of the vehicle. The control unit 10 is configured to provide an autonomous operation signal indicating a desired autonomous operation mode of the vehicle.

The bistable valve 5 comprises a first terminal 5a, a second terminal 5b connected to a pressure sink 20 and a third terminal 3c. The third terminal 5c is connectable to a control line 6 coupled to the parking brake control line 28 and to the trailer control line 29.2. The bistable valve 5 is switchable in a first stable position 51, where the first terminal 5a is connected with the third terminal 5c and in a second stable position 52, where the second terminal 5b is connected with the third terminal 5c. The valve unit 3 is coupled to the bistable valve 5, to the pressure sink 20 and to the pressure supply terminal 1 and is configured to receive the autonomous operation signal.

The valve unit 3 is operable, upon reception of the autonomous operation signal, to establish a connection between the first terminal 5a of the bistable valve 5 and the pressure supply terminal 1 and, if no autonomous operation signal is received, to connect the first terminal 5a with the pressure sink 20. Therefore, in the default state, the valve unit 3 is in the exhaust state so that if a malfunction occurs, the system will go in the safe state.

The following embodiments have several features in common with the conventional system depicted in Fig. 9. The common feature involve, in particular, the valve unit 7 (corresponding to the valve unit 7' of Fig. 9), the select high valve 8, the relay valve 9, the pressure sensor unit(s) 30, and the various terminals. Thus, the description of these features is shorten here. For more details it is referred to the introductory part of the description.

However, the following embodiments differ from the convention system, in particular, by the valve unit 3 and the bistable valve 5 making the normally open valve 12 redundant.

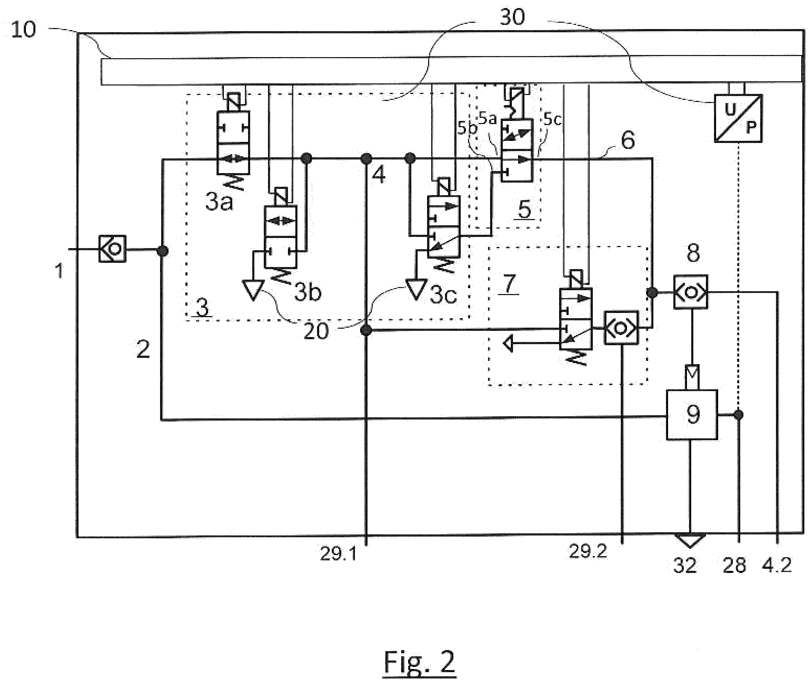

Fig. 2 depicts a first detailed embodiment of a park braking system which includes the apparatus as described with Fig. 1A.

The valve unit 3 comprises an activation valve 3c with a first terminal connected to the pressure supply terminal 1, a second terminal connected to the pressure sink 20, and a third terminal connected to the second terminal 5b of the bistable valve 5. The activation valve 3c is operable to connect its third terminal to its second terminal, when no autonomous operation signal is received, and, upon reception of the autonomous operation signal, to connect its first terminal with its third terminal.

As in the conventional system, the valve unit 3 comprises further a load valve 3a and an exhaust valve 3b and the control unit is operable to provide an exhaust signal for exhausting the bistable valve 5. Upon receiving the exhaust signal, the load valve 3a is operable to disconnect the pressure supply terminal 1 from the first terminal 5a of the bistable valve 5. The exhaust valve 3b is operable, upon reception of the exhaust signal, to connect the first terminal 5a of the bistable valve 5 with the pressure sink 20. It is understood that the exhaust signal is, in general, different from the autonomous operation signal.

The select high valve 8 is now connected directly to the third terminal 5c of the bistable valve 5 and the service brake terminal 4.2. The select high valve 8 is operable to provide again to the outlet selectively pressured air from the third terminal 5c of the bistable valve 5 or pressured air from the service brake terminal 4.2 dependent upon which of the pressured air comprises a higher air pressure.

In other words, in this embodiment of the parking brake system the bistable valve 5 is formed as a 3/2 bistable valve 5 which can be pre-controlled by the load valve 3a and the exhaust valve 3b. The output of the bistable valve 5 provides an input for the select high valve 8. The select high valve 8 is configured to select to higher pressure, thereby preventing that the service brake force is added to the wheel brake during parking. The output of the select high valve 8 controls the relay valve 9 that executes the parking brake function on the wheel brake actuators.

This system allows an electro-pneumatic parking brake function with a single circuit electronic control architecture. The safe state is ensured by the actual position of the bistable valve, which provides two safe positions based on the last position of the 3/2 bistable valve 5.

The controllable valve unit 7 of Fig. 2 comprises again a first terminal coupled (e.g. directly) to the first terminal 5a of the bistable valve 5, a second terminal coupled (e.g. directly) to the pressure sink 20, a third terminal coupled (e.g. directly) to the third terminal 5c of the bistable valve 5, and a fourth terminal connected to the trailer control line 29.2. The controllable valve unit 7 is operable, in a first mode, to supply an air pressure at the trailer control line 29.2. The supplied air pressure is the larger pressure of the air pressure at the first terminal 5a and the air pressure at the third terminal 5c. In a second mode of operation, controllable valve unit 7 supplies the pressure of the third terminal 5c of the bistable valve 5 to the trailer control line 29.2 independently of the air pressure at the first terminal 5a of the bistable valve 5, wherein the control unit 10 is configured to control the first mode and the second mode.

Therefore, when comparing the park braking system as depicted in Fig. 2 with the conventional park braking system of Fig. 9, the added activation valve 3c makes the generally open valve 12 redundant (it is not needed in the present invention). In particular, the activation valve 3c provides a switchable connection of the pressure supply terminal 1 or the pressure sink 20 with the second terminal 5b of the bistable valve 5. If no autonomous operation signal is received, the activation valve 3c is configured to connect the pressure sink 20 to bistable valve 5 (its second terminal). This is the default position, which is also set in case a malfunction occurs or if no autonomous operation signal is present. Only upon reception of the autonomous operation signal, the activation valve 3c connects the pressure supply terminal 1 to the second terminal of bistable valve 5. In particular, in the schematic view shown in Fig. 2 of the electronically controlled pneumatic park brake system one 3/2 valve (the activation valve 3c) was added to solve the underlying technical problem.

It is noted, this solution provides the further advantage that the park brake operation is not modified if the 3/2 valve 3c is not activated. Therefore, the safe state is determined by the position of the 3/2 bistable valve 5 and this way the public road legal regulations are met.

Furthermore, the arrangement as shown in Fig. 2 enables an automatic low-speed drive operation on closed tracks (e.g. on cargo yards). For example, when the driver is not present, a compressed air service brake system in combination with a compressed air park brake system electronically controlled by a single circuit may be used, with the improved fail safe mode, in such a way that a safe parked state of the vehicle is ensured by the park brake in case any malfunction occurs (e.g. loss of electricity).

This safe position is achieved during the (low speed) automated drive by the following way: Before the autonomous drive of the vehicle is started the bistable 3/2 valve 5 is switched to the park (lower) position where control line 6 is connected to the 3/2 valve 3c, which is in its inactive exhaust position, the pressure from control line 6 is released, the parking brake is activated. Starting the autonomous drive, the control line 6 will be supplied with pressure (parking brake will be released) via switching the activation valve 3c (e.g. a solenoid) to it's other position (providing a connection to supply pressure to the bistable valve 5) instead of changing the position of bistable valve 5. This enables to start the vehicle even when a trailer is connected and controlled through any of the ports 29.2 or 29.1. If a malfunction occurs during a (low speed) autonomous drive (e.g. on a closed track) the 3/2 activation valve 3c is released, thereby setting the system in safe parking position for both the truck and the trailer.

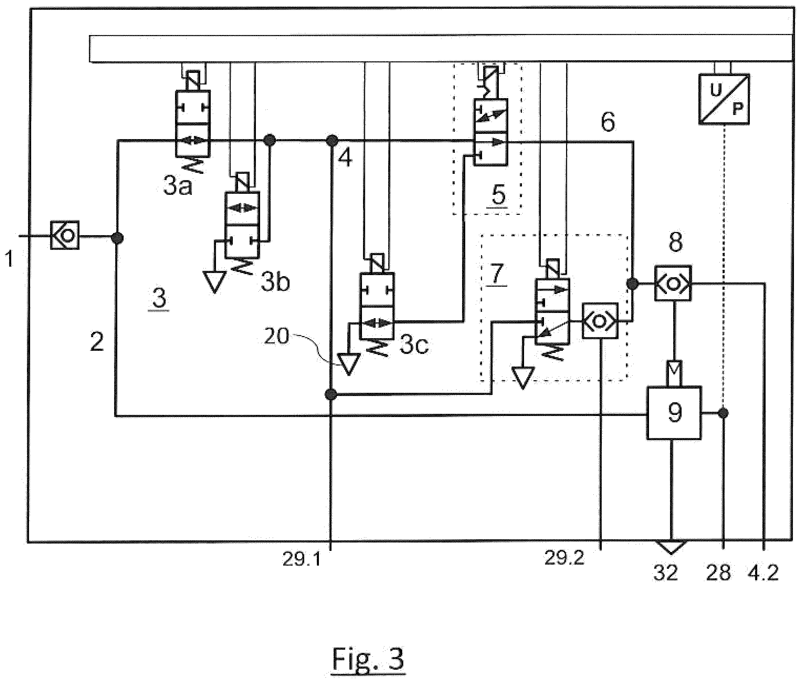

Fig. 3 depicts another embodiment of a park braking system including the apparatus as described with Fig. 1A, which differs from the embodiment of Fig. 2 merely by a modified activation valve 3c.

In detail, the valve unit 3 comprises now an activation valve 3c arranged between the second terminal 5b of the bistable valve 5 and the pressure sink 20. Furthermore, the activation valve 3c is operable to connect the pressure sink 20 with the second terminal 5b of the bistable valve 5, when no autonomous operation signal is received. Only upon receiving the autonomous operation signal, the activation valve 3c disconnects the second terminal 5b of the bistable valve 5 from the pressure sink 20. Again, the inactive position of the activation valve 3c corresponds to the state, in which the valve is to be set in case a malfunction occurs (safe state).

In the embodiment of Fig. 3 the electronically controlled park brake for commercial vehicles comprises a 2/2 valve as the activation valve 3c to implement a backup automatic parking. All other components are similar to the components of the embodiment as shown in Fig. 2. Therefore, a repetition of the components already described in Fig. 2 is avoided.

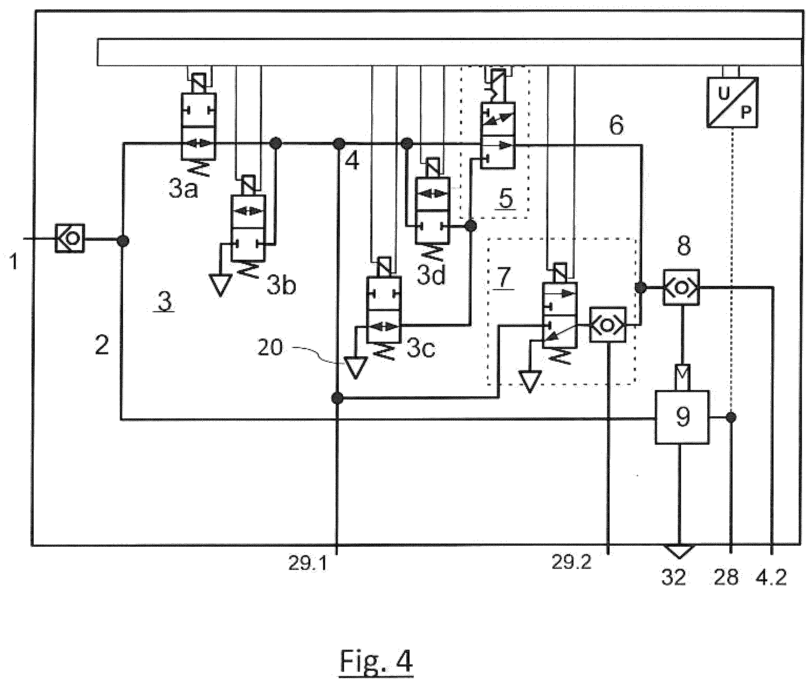

Fig. 4 depicts another embodiment of a park braking system including the apparatus as described with Fig. 1A, which differs from the embodiment of Fig. 3 merely by further comprising a pressure supply valve 3d.

In detail, the valve unit 3 of this embodiment further comprises the pressure supply valve 3d arranged between the second terminal 5b of the bistable valve 5 and the pressure supply terminal 1. The pressure supply valve 3d is operable, upon reception of the autonomous operation signal, to connect the pressure supply terminal 1 with the second terminal 5b, and, when no autonomous operation signal is received, to disconnect the second terminal 5b of the bistable valve 5 from the pressure supply terminal 1. Hence, depicted electronically controlled park brake system for commercial vehicles comprises two 2/2 valve extension for backup automatic parking: the activation valve 3c (as described in Fig. 3) and pressure supply valve 3d.

Therefore, the same functionality as described above with Fig. 2 can be achieved, when the 3/2 valve 3c is replaced by two 2/2 valves as depicted in Fig. 4 (the added 2/2 valves are denoted by activation valve 3c and the pressure supply valve 3d). During the low speed autonomous vehicle operation both are activated. In case a malfunction (no autonomous mode signal) is encountered both valves are released, e.g. at the same time.

The embodiment of Fig. 3 is a simplified version of the schematic shown in Fig. 4, wherein the 2/2 load valve (the pressure supply valve 3d), which is responsible to refill leakages, is avoided.

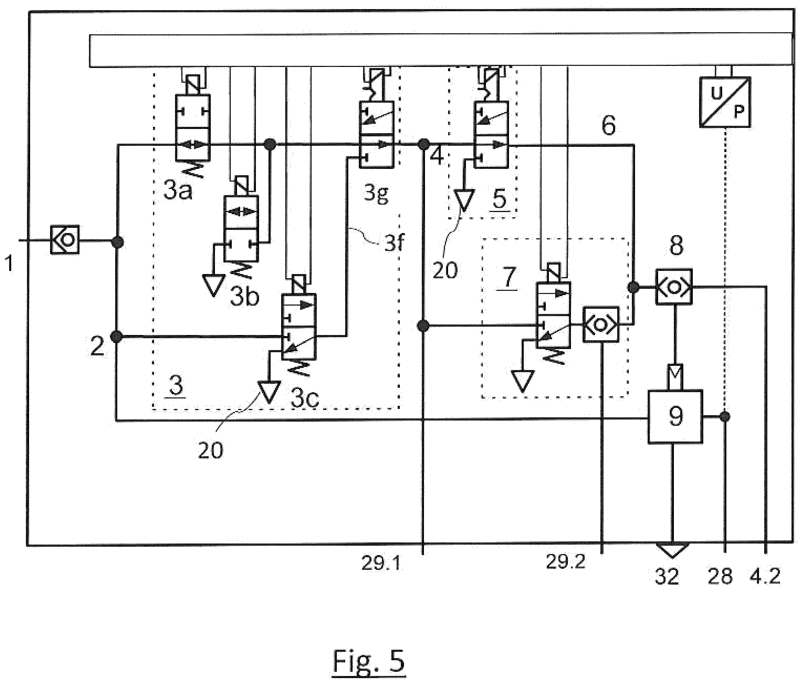

Fig. 5 depicts another embodiment of a park braking system, which includes now the apparatus as described with Fig. 1B.

In detail, the valve unit 3 in this embodiment comprises a mode selection valve 3g and an activation valve 3c, which are connected via a connection line 3f. The mode selection valve 3g is operable, in a first mode, to connect the first terminal 5a of the bistable valve 5 with the pressure supply terminal 1 and, in a second mode, to connect the first terminal 5a of the bistable valve 5 with the connection line 3f. The activation valve 3c is operable, upon reception of the autonomous operation signal, to connect the pressure supply terminal 1 with the connection line 3f and, if no autonomous operation signal is received, to connect the pressure sink 20 with the connection line 3f.

In particular, the depicted schematic of an electronically controlled park brake for commercial vehicles comprises a 3/2 monostable valve (the activation valve 3c) and a 3/2 bistable valve (the mode selection valve 3g) as an extension for the valve unit 3 for backup automatic parking. In this realization the desired functionality is achieved without modifying the exhaust port (pressure sink 20) of the main bistable valve 5 (see Fig. 5). Rather, another 3/2 bistable valve (the mode selection valve 3g) and a 3/2 monostable valve (the activation valve 3c) are added to the input of the main bistable valve 5.

In this realization the drive operation is always executed in the same position of the main bistable valve 5 (as shown e.g. in Fig. 5) regardless of whether it is operated with driver or without. The added 3/2 bistable valve 3g serves therefore as a mode selector between: (i) the public road operation mode in its connecting position (with two safe states according to the last position of the 3/2 bistable valve 5), and (ii) the low speed closed track operation mode in its exhaust position (lower position) with a fixed parked safe state, where the 3/2 monostable valve 3c is also activated during the autonomous drive operation. In case a malfunction occurs, the 3/2 valve 3c is again released resulting in a safe parked position. An additional feature of this solution is that trailer control line 29.1 is also released (trailer brake activated) in the safe failure state (in mode (ii)) of autonomous driving. However, the trailer is not braked if the vehicle is parked in public road operation mode (in mode (i)).

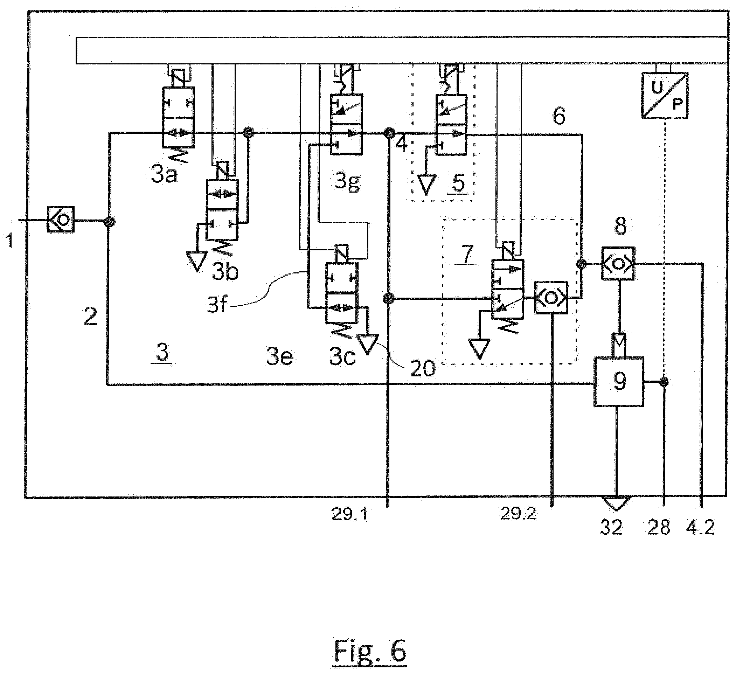

Fig. 6 depicts another embodiment of a park braking system including the apparatus as described with Fig. 1B, which differs from the embodiment of Fig. 5 by substituting the 3/2 monostable valve by a 2/2 valve as activation valve 3c.

In detail, in the embodiment of Fig. 6, the valve unit 3 comprises again a mode selection valve 3g and an activation valve 3c connected via a connection line 3f. The mode selection valve 3g is operable, in a first mode, to connect the first terminal 5a of the bistable valve 5 with the pressure supply terminal 1 and, in a second mode, to connect the first terminal 5a of the bistable valve 5 with the connection line 3f. The activation valve 3c is operable, if no autonomous operation signal is received, to connect the connection line 3f with the pressure sink 20 and, upon reception of the autonomous operation signal, to disconnect the connection line 3f from the pressure sink 20.

Thus, Fig. 6 depicts a schematic of an electronically controlled park brake for commercial vehicles with a 2/2 monostable valve (as the activation valve 3c) and a 3/2 bistable valve (as the mode selection valve 3g) as extension for backup automatic parking.

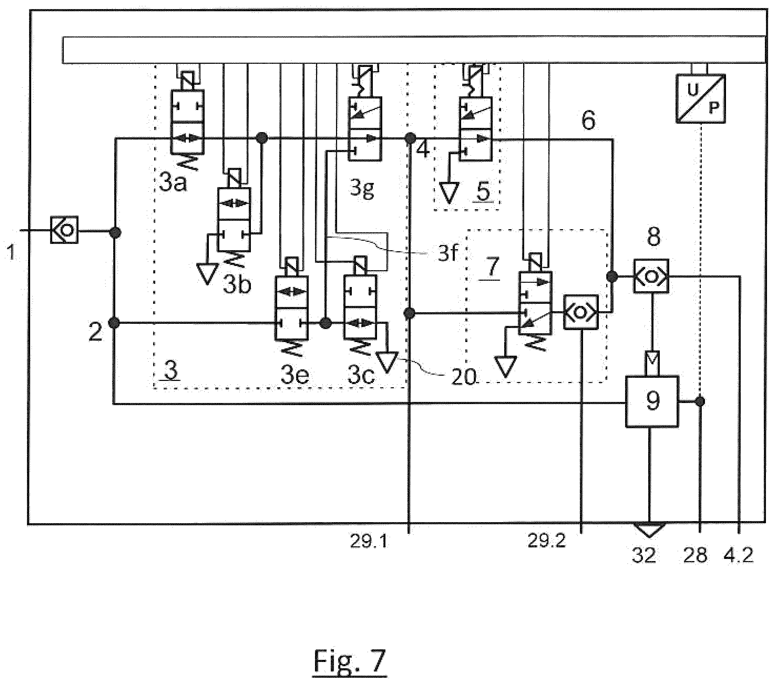

Fig. 7 depicts another embodiment of a park braking system including the apparatus as described with Fig. 1B, which differs from the embodiment of Fig. 6 by adding an additional 2/2 valve (the pressure supply valve 3e).

In detail, the valve unit 3 comprises now the pressure supply valve 3e arranged between the connection line 3f and the pressure supply terminal 1. The pressure supply valve 3e is operable, upon reception of the autonomous operation signal, to connect the pressure supply terminal 1 with the connection line 3f, and, when no autonomous operation signal is received, to disconnect the connection line 3f from the pressure supply terminal 1.

Therefore, in the embodiment of Fig. 7 the electronically controlled park brake for commercial vehicles comprises two 2/2 monostable (the activation valve 3c and the pressure supply valve 3e) and a 3/2 bistable valve (the mode selection valve 3g) as extension for backup automatic parking. During the low speed autonomous vehicle operation both are activated, and in case of a malfunction both are released, e.g. at the same time.

Again, Fig. 6 depicts a simplified version of the schematic shown in Fig. 7 where the 2/2 load valve (the pressure supply valve 3e) is omitted.

The control of the bistable valves (3d and 5) shown in Figs. 2-7 can be implemented in different ways: in an electromagnetic (solenoid) way, in an electromechanical (electric motor) way, in a pneumatic way, etc. In addition, in further embodiments of the systems depicted in Fig. 2 to 7 other optional components may be present so the shown components may not be directly connected or directly coupled, but only via the non-shown optional components.

The activation valves 3c defined in all embodiments should be understood in very broad terms in that it can be any means suitable to provide the defined function to be activated upon receiving the automatic operation signal. If this signal is not present, they may go automatically in the safe state without needing a controlled actuation (e.g. driven by springs).

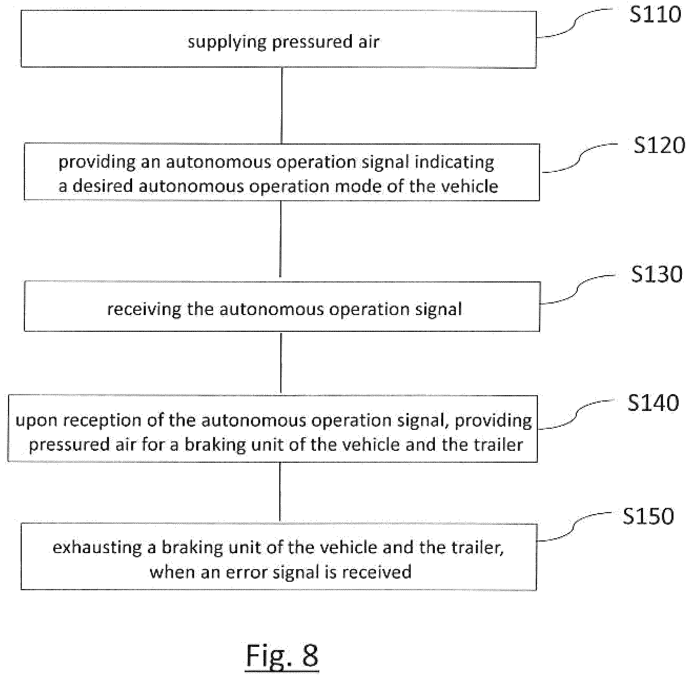

Fig. 8 depicts a flow chart defining a method for providing a control of a pneumatic park brake actuation of a vehicle operable to tow a trailer. The method comprises the steps of: supplying S110 pressured air; providing S120 an autonomous operation signal indicating a desired autonomous operation mode of the vehicle, receiving S130 the autonomous operation signal; upon reception of the autonomous operation signal, providing S140 pressured air for a braking unit of truck and trailer; and exhausting S150 a braking unit of truck and trailer, when an error signal is received.

Further advantageous embodiments of the present invention relate to a commercial vehicle which comprises: a single circuit electronically controlled service brake system, furthermore a single circuit electronically controlled parking brake system and is characterized in that the parking brake system improves the fail safe mode of the brake system.

In yet another embodiment the commercial vehicle is characterized in that the parking brake system has two operation modes, where in the first one the safe state is determined by the last position of parking brake (driving or parking positions) and in the second one the safe state is always a fixed parked position whenever a malfunction occurs.

In yet another embodiment the commercial vehicle is characterized in that the parking brake is actuated by spring brake and released by compressed air.

In yet another embodiment the commercial vehicle is further characterized in that the parking brake system comprises a 3/2 valve 3c connected to the exhaust port of the 3/2 bistable valve 5 (as depicted in Fig. 2).

In yet another embodiment the commercial vehicle is characterized in that the parking brake system comprises another 2/2 valve 3d connected to the exhaust port of the 3/2 bistable valve 5 (as depicted in Fig. 3).

In yet another embodiment the commercial vehicle is further characterized in that the parking brake system comprises a 2/2 valves 3c connected to the exhaust port of the 3/2 bistable valve 5 (as depicted in Fig. 4).

In yet another embodiment the commercial vehicle is further characterized in that the parking brake system comprises a 3/2 bistable valve 3g that enables to select between two operation modes, where the 3/2 bistable valve 3g is connected to the input of the 3/2 bistable valve 5, and additionally comprises a 3/2 monostable valve 3c (as depicted in Fig. 5).

In yet another embodiment the commercial vehicle is further characterized in that the parking brake system comprises another 2/2 valve 3e connected to the exhaust port of the 3/2 bistable valve 3g (as depicted in Fig. 6).

In yet another embodiment the commercial vehicle is further characterized in that the parking brake system comprises a 3/2 bistable valve 3g that enables to select between two operation modes, where the 3/2 bistable valve 3g is connected to the input of the 3/2 bistable valve 5, and additionally comprises a 2/2 monostable valves 3c (as depicted in Fig. 7).

In yet another embodiment the commercial vehicle is further characterized in that the bistable valves 3g and 5 is implemented in electromagnetic (solenoid) way.

In yet another embodiment the commercial vehicle is further characterized in that the bistable valves 3g and 5 are implemented in an electromechanical (electric motor) way. In yet another embodiment the commercial vehicle is further characterized in that the bistable valves 3g and 5 is implemented in a pneumatic way.

It will be understood that when an element is referred to as being "connected" or "coupled" to another element, it can be directly connected or coupled to the other element or intervening elements may be present. In contrast, when an element is referred to as being "directly connected" or "directly coupled" to another element, there are no intervening elements present. Other words used to describe the relationship between elements should be interpreted in a like fashion (e.g., "between" versus "directly between," "adjacent" versus "directly adjacent," etc.).

The description and drawings merely illustrate the principles of the disclosure. It will thus be appreciated that those skilled in the art will be able to devise various arrangements that, although not explicitly described or shown herein, embody the principles of the disclosure and are included within its scope.

### List of reference signs

- 1: pressure supply terminal
- 3a: load valve
- 3b: exhaust valve
- 3c: activation valve
- 3d,3e: pressure supply valves
- 3f: connection line
- 3g: mode selection valve
- 4.2: service brake terminal
- 5: bistable valve
- 5a: first terminal
- 5b: second terminal
- 5c: third terminal
- 8: select high valve
- 9: relay valve unit
- 10: control unit
- 20: pressure sink
- 28: spring brake terminal
- 29.2: trailer control line
- 29.1: further trailer control line
- 30: pressure sensor unit(s)
- 51: first stable position
- 51: second stable position

## Claims

1. An apparatus for controlling a pneumatic park brake actuation of a vehicle operable to tow a trailer, the apparatus comprising:
a pressure supply terminal (1) to supply pressured air;
a control line (28) configured to provide pressured air for spring brake actuators of the vehicle;
a trailer control line (29.2) configured to provide pressured air for a trailer braking unit of the vehicle;
a control unit (10) configured to provide an autonomous operation signal indicating a desired autonomous vehicle operation mode;
a bistable valve (5) with a first terminal (5a), a second terminal (5b) and a third terminal (5c), the third terminal (5c) being connectable to parking brake actuators (28) and to the trailer control line (29.2), the bistable valve (5) being switchable in a first stable position (51) where the first terminal (5a) is connected with the third terminal (5c) and in a second stable position (52) where the second terminal (5b) is connected with the third terminal (5c),
**characterized by**
a valve unit (3) coupled to the bistable valve (5), to a pressure sink (20) and to the pressure supply terminal (1) and configured to receive the autonomous operation signal, the valve unit (3) being operable:
- to connect the first terminal (5a) with the pressure supply terminal (1),
- to connect the second terminal (5b) with a pressure sink (20), when no autonomous operation signal is received, and
- upon reception of the autonomous operation signal, to interrupt the connection between the second terminal (5b) and the pressure sink (20).

2. The apparatus according to claim 1, wherein the valve unit (3) comprises an activation valve (3c) with a first terminal connected to the pressure supply terminal (1), a second terminal connected to the pressure sink (20) and a third terminal connected to the second terminal (5b) of the bistable valve (5),
the activation valve (3c) being operable to connect its third terminal to its second terminal, when no autonomous operation signal is received, and, upon reception of the autonomous operation signal, to connect its first terminal with its third terminal.

3. The apparatus according to claim 1, wherein the valve unit (3) comprises an activation valve (3c) arranged between the second terminal (5b) of the bistable valve (5) and the pressure sink (20),
the activation valve (3c) being operable to connect the pressure sink (20) with the second terminal (5b) of the bistable valve (5), when no autonomous operation signal is received, and, upon reception of the autonomous operation signal, to disconnect the second terminal (5b) of the bistable valve (5) from the pressure sink (20).

4. The apparatus according to claim 3, wherein the valve unit (3) further comprises a pressure supply valve (3d) arranged between the second terminal (5b) of the bistable valve (5) and the pressure supply terminal (1),
the pressure supply valve (3d) being operable, upon reception of the autonomous operation signal, to connect the pressure supply terminal (1) with the second terminal (5b), and, when no autonomous operation signal is received, to disconnect the second terminal (5b) of the bistable valve (5) from the pressure supply terminal (1).

5. An apparatus for controlling a pneumatic park brake actuation of a vehicle which is suitable to tow a trailer, the apparatus comprising:
a pressure supply terminal (1) to supply pressured air;
a control line (28) configured to provide pressured air for spring brake actuators of the vehicle;
a trailer control line (29.2) configured to provide pressured air for a trailer braking unit of the vehicle;
a control unit (10) configured to provide an autonomous operation signal indicating a desired autonomous vehicle operation mode;
a bistable valve (5) with a first terminal (5a), a second terminal (5b) connected to a pressure sink (20) and a third terminal (5c), the third terminal (5c) being connectable to the trailer control line (29.2), the bistable valve (5) being switchable in a first stable position (51) where the first terminal (5a) is connected with the third terminal (5c) and in a second stable position (52) where the second terminal (5b) is connected with the third terminal (5c),
**characterized by**
a valve unit (3) coupled to the bistable valve (5), to the pressure sink (20) and to the pressure supply terminal (1) and configured to receive the autonomous operation signal, the valve unit (3) being operable:
- upon reception of the autonomous operation signal, to establish a connection between the first terminal (5a) of the bistable valve (5) with the pressure supply terminal (1) and
- if no autonomous operation signal is received, to connect the first terminal (5a) with the pressure sink (20),
wherein the valve unit (3) comprises a mode selection valve (3g) and an activation valve (3c) connected via a connection line (3f),
the mode selection valve (3g) being bistable and operable, in a first mode when no autonomous operation signal is received, to connect the first terminal (5a) of the bistable valve (5) with the pressure supply terminal (1) and, in a second mode when the autonomous operation signal is received, to connect the first terminal (5a) of the bistable valve (5) with the connection line (3f),
the activation valve (3c) being operable, if no autonomous operation signal is received, to connect the connection line (3f) with the pressure sink (20) and, upon reception of the autonomous operation signal, to disconnect the connection line (3f) from the pressure sink (20).

6. The apparatus according to claim 5, wherein
the activation valve (3c) is further operable, upon reception of the autonomous operation signal, to connect the pressure supply terminal (1) with the connection line (3f).

7. The apparatus according to claim 6, wherein the valve unit (3) further comprises a pressure supply valve (3e) arranged between the connection line (3f) and the pressure supply terminal (1),
the pressure supply valve (3e) being operable, upon reception of the autonomous operation signal, to connect the pressure supply terminal (1) with the connection line (3f), and, when no autonomous operation signal is received, to disconnect the connection line (3f) from the pressure supply terminal (1).

8. The apparatus according to one of the preceding claims, wherein the valve unit (3) further comprises a load valve (3a) and an exhaust valve (3b), the control unit (10) being operable to provide an exhaust signal for exhausting the bistable valve (5),
the load valve (3a) being operable, upon reception of the exhaust signal, to disconnect the pressure supply terminal (1) from the first terminal (5a) of the bistable valve (5),
the exhaust valve (3b) being operable, upon reception of the exhaust signal, to connect the first terminal (5a) of the bistable valve (5) with the pressure sink (20).

9. The apparatus according to one of the preceding claims, further comprising a further trailer control line (29.1), the further trailer control line (29.1) being connected to the first terminal (5a) of the bistable valve (5).

10. The apparatus according to one of the preceding claims, further comprising a select high valve (8), a relay valve unit (9), a spring brake terminal (28) connectable to a spring brake cylinder of the vehicle and a service brake terminal (4.2) connectable to a service brake of the vehicle,
the select high valve (8) being arranged between the third terminal (5c) of the bistable valve (5) and the service brake terminal (4.2) and comprises an outlet, the select high valve (8) being operable to provide to the outlet selectively pressured air from the third terminal (5c) of the bistable valve (5) or pressured air from the service brake terminal (4.2) dependent upon which of the pressured air comprises a higher air pressure,
the relay valve unit (9) providing an air connection between the pressure supply terminal (1) and the spring brake terminal (28) and comprising a control inlet, the control inlet being connected to the outlet of the select high valve (8), the relay valve unit (9) being operable to modulate an air pressure supplied to the spring brake terminal (28) depending on an air pressure present at the control inlet.

11. The apparatus according to claim 10, further comprising a controllable valve unit (7) with a first terminal being connected to the first terminal (5a) of the bistable valve (5), a second terminal being connected to the pressure sink (20), a third terminal being connected to the third terminal (5c) of the bistable valve (5), and a fourth terminal being connected to the trailer control line (29.2),
the controllable valve unit (7) being operable, in a first mode, to provide an air pressure at the trailer control line (29.2) which is a larger one of an air pressure at the first terminal (5a) and an air pressure at the third terminal (5c) and, in a second mode of operation, to provide the air pressure of the third terminal (5c) of the bistable valve (5) to the trailer control line (29.2) independently of the air pressure at the first terminal (5a) of the bistable valve (5), wherein the control unit (10) is configured to control the first mode and the second mode.

12. The apparatus according to one of the preceding claims, further comprising at least one pressure sensor unit (30), the at least one pressure sensor unit (30) being operable to measure a pressure at the first terminal (5a) of the bistable valve (5) and/or to measure a pressure at the second terminal of the relay valve unit (9).

13. The apparatus according to one of the preceding claims, wherein the bistable valve (5) and/or the bistable mode selection valve (3g) are one of the following: an electromagnetically controlled valve, an electromechanically controlled valve, and a pneumatically controlled valve, wherein the control unit (10) is configured to control the bistable valve (5) and/or the mode selection valve (3g).

14. A parking brake system of a commercial vehicle with an apparatus according to one of the preceding claims.

## Patentansprüche

1. Vorrichtung zur Ansteuerung einer pneumatischen Fesstellbremsenbetätigung eines zum Schleppen eines Anhängers betreibbaren Fahrzeugs, umfassend:
einen Druckversorgungsanschluss (1) zur Druckluftversorgung;
eine zur Bereitstellung von Druckluft für Federspeicherbremsenaktoren des Fahrzeugs ausgelegte Steuerleitung (28);
eine zur Bereitstellung von Druckluft für eine Anhängerbremseinheit des Fahrzeugs ausgelegte Anhängersteuerleitung (29.2);
eine zur Bereitstellung eines autonomen Betriebssignale, das eine gewünschte autonome Fahrzeugbetriebsart anzeigt, ausgelegte Steuereinheit (10);
ein bistabiles Ventil (5) mir einem ersten Anschluss (5a), einem zweiten Anschluss (5b) und einem dritten Anschluss (5c), wobei der dritte Anschluss (5c) an die Federspeicherbremsenaktoren (28) und die Anhängersteuerleitung (29.2) anschließbar ist, wobei das bistabile Ventil (5) in eine erste stabile Stellung, in der der erste Anschluss (5a) mit dem dritten Anschluss (5c) verbunden ist, und in eine zweite stabile Stellung, in der der zweite Anschluss (5b) mit dem dritten Anschluss (5c) verbunden ist, schaltbar ist,
**gekennzeichnet durch**
eine an das bistabile Ventil (5), eine Drucksenke (20) und den Druckversorgungsanschluss (1) gekoppelte Ventileinheit (3), die zum Empfang des autonomen Betriebssignals ausgelegt ist, wobei die Ventileinheit (3) dazu betätigt werden kann,
- um den ersten Anschluss (5a) mit dem Druckversorgungsanschluss (1) zu verbinden,
- um den zweiten Anschkluss (5b) mit einer Drucksenke (20) zu verbinden, wenn kein autonomes Betriebssignal empfangen wird, und
- auf Empfang des autonomen Betriebssignals die Verbindung zwischen dem zweiten Anschluss (5b) und der Drucksenke (20) zu unterbrechen.

2. Vorrichtung nach Anspruch 1, wobei die Ventileinheit (3) ein Aktivierungsventil (3c) mit einem mit dem Druckversorgungsanschluss (1) verbundenen ersten Anschluss, einem mit der Drucksenke (20) verbundenen zweiten Anschluss und einem mit dem zweiten Anschluss (5b) des bistabilen Ventils (5) verbundenen dritten Anschluss umfasst,
wobei das Aktivierungsventil (3c) zur Verbindung seines dritten Anschlusses mit seinem zweiten Anschluss betätigbar ist, wenn kein autonomes Betriebssignal empfangen wird, und auf Empfang des autonomen Betriebssignals zur Verbindung seines ersten Anschlusses mit seinem dritten Anschluss betätigbar ist.

3. Vorrichtung nach Anspruch 1, wobei die Ventileinheit (3) ein zwischen dem zweiten Anschluss (5b) des bistabilen Ventils (5) und der Drucksenke (20) angeordnetes Aktivierungsventil (3c) umfasst,
wobei das Aktivierungsventil (3c) zur Verbindung der Drucksenke (20) mit dem zweiten Anschluss (5b) des bistabilen Ventils (5) betätigbar ist, wenn kein autonomes Betriebssignal empfangen wird, und auf Empfang des autonomen Betriebssignals zum Trennen des zweiten Anschlusses (5b) des bistabilen Ventils (5) von der Drucksenke (20) betätigbar ist.

4. Vorrichtung nach Anspruch 3, wobei die Ventileinheit (3) weiter ein zwischen dem zweiten Anschluss (5b) des bistabilen Ventils (5) und dem Druckversorgungsanschluss (1) angeordnetes Druckversorgungsventil (3d) umfasst,
wobei das Druckversorgungsventil (3d) auf Empfang des autonomen Betriebs-, signals zur Verbindung des Druckversorgungsanschlusses (1) mit dem zweiten Anschluss (5b) betätigbar ist und wenn kein autonomes Betriebssignal empfangen wird, zum Trennen des zweiten Anschlusses (5b) des bistabilen Ventils (5) vom Druckversorgungsanschluss (1) betätigbar ist.

5. Vorrichtung zur Ansteuerung einer pneumatischen Fesstellbremsenbetätigung eines zum Schleppen eines Anhängers geeigneten Fahrzeugs, umfassend:
einen Druckversorgungsanschluss (1) zur Druckluftversorgung;
eine zur Bereitstellung von Druckluft für Federspeicherbremsenaktoren des Fahrzeugs ausgelegte Steuerleitung (28);
eine zur Bereitstellung von Druckluft für eine Anhängerbremseinheit des Fahrzeugs ausgelegte Anhängersteuerleitung (29.2);
eine zur Bereitstellung eines autonomen Betriebssignale, das eine gewünschte autonome Fahrzeugbetriebsart anzeigt, ausgelegte Steuereinheit (10);
ein bistabiles Ventil (5) mit einem ersten Anschluss (5a), einem zweiten Anschluss (5b) und einem dritten Anschluss (5c), wobei der dritte Anschluss (5c) an die Federspeicherbremsenaktoren (28) und die Anhängersteuerleitung (29.2) anschließbar ist, wobei das bistabile Ventil (5) in eine erste stabile Stellung (51), in der der erste Anschluss (5a) mit dem dritten Anschluss (5c) verbunden ist, und in eine zweite stabile Stellung (52), in der der zweite Anschluss (5b) mit dem dritten Anschluss (5c) verbunden ist, schaltbar ist,
**gekennzeichnet durch**
eine an das bistabile Ventil (5), eine Drucksenke (20) und den Druckversorgungsanschluss (1) gekoppelte Ventileinheit (3), die zum Empfang des autonomen Betriebssignals ausgelegt ist, wobei die Ventileinheit (3) dazu betätigt werden kann,
- um auf Empfang des autonomen Betriebssignals eine Verbindung zwischen dem ersten Anschluss (5a) des bistabilen Ventils (5) und dem Druckversorgungsanschluss (1) herzustellen, und
- wenn kein autonomes Betriebssignal empfangen wird, den ersten Anschluss (5a) mit der Drucksenke (29) zu verbinden,
wobei die Ventileinheit (3) ein Betriebsartwählventil (3g) und ein über eine Verbindungsleitung (3f) verbundenes Aktivierungsventil (3c) umfasst,
wobei das Betriebsartwählventil (3g) bistabil ist und in einer ersten Betriebsart, wenn kein autonomes Betriebssignal empfangen wird, zur Verbinding des ersten Anschlusses (5a) des bistabilen Ventils (5) mit dem Druckversorgungsanschluss (1) betätigbar ist, und in einer zweiten Betriebsart, wenn das autonome Betriebssignal empfangen wird, zur Verbinding des ersten Anschlusses (5a) des bistabilen Ventils (5) mit der Verbindungsleitung (3f) betätifbar ist,
wobei das Aktivierungsventil (3c) zur Verbindung der Verbindungsleitung (3f) mit der Drucksenke (20) betätigbar ist, wenn kein autonomes Betriebssignal empfangen wird, und auf Empfang des autonomen Betriebssignals zum Trennen der Verbindungsleitung (3f) von der Drucksenke (20) betätigbar ist.

6. Vorrichtung nach Anspruch 5, wobei
das Aktivierungsventil (3c) weiter auf Empfang des autonomen Betriebssignals zur Verbindung des Druckversorgungsanschlusses (1) mit der Verbindungsleitung (3f) betätigbar ist.

7. Vorrichtung nach Anspruch 6, wobei die Ventileinheit (3) weiter ein zwischen der Verbindungsleitung (3f) und dem Druckversorgungsanschluss (1) angeordnetes Druckversorgungsventil (3e) umfasst,
wobei das Druckversorgungsventil (3e) auf Empfang des autonomen Betriebssignals zur Verbindung des Druckversorgungsanschlusses (1) mit der Verbindungsleitung (3f) betätigbar ist und, wenn kein autonomes Betriebssignal empfangen wird, zum Trennen der Verbindungsleitung (3f) vom Druckversorgungsanschluss (1) betätigbar ist.

8. Vorrichtung nach einem der vorhergehenden Ansprüche, wobei die Ventileinheit (3) weiter ein Lastventil (3a) und ein Ablassventil (3b) umfasst und die Steuereinheit (10) zur Bereitstellung eines Ablasssignals zm Ablassen des bistabilen Ventils (5) betätigbar ist,
wobei das Lastventil (3a) auf Empfang des Ablasssignals zum Trennen des Druckversorgungsanschlusses (1) von ersten Anschluss (5a) des bistabilen Ventils (5) betätigbar ist,
wobei das Ablassventil (3b) auf Empfang des Ablasssignals zur Verbindund des ersten Anschlusses (5a) des bistabilen Ventils (5) mit der Drucksenke (20) betätigbar ist.

9. Vorrichtung nach einem der vorhergehenden Ansprüche, weiter umfassend eine weitere Anhängersteuerleitung (29.1), wobei die weitere Anhängersteuerleitung (29.1) mit dem ersten Anschluss (5a) des bistabilen Ventils (5) verbunden ist.

10. Vorrichtung nach einem der vorhergehenden Ansprüche, weiter umfassend ein Select-High-Ventil (8), eine Relaisventileinheit (9), einen mit einem Federspeicherbremszylinder des Fahrzeugs verbindbaren Federspeicherbremsenanschluss (28) und einen mit einer Betriebsbremse des Fahrzeugs verbindbaren Betriebsbremsenanschluss (4.2),
wobei das Select-High-Ventil (8) zwischen dem dritten Anschluss (5c) des bistabilen Ventils (5) und dem Betriebsbremsenanschluss (4.2) angeordnet ist und einen Auslass umfasst, wobei das Select-High-Ventil (8) zur wahlweisen Bereitstellung von Druckluft aus dem dritten Anschluss (5c) des bistabilen Ventils (5) oder von Druckluft aus dem Betriebsbremsenanschluss (4.2) betätigbar ist, je nach dem, welche Druckluft den höheren Luftdruck hat,
wobei das Relaisventil (9) eine Luftverbindung zwischen dem Druckversorgungsanschluss (1) und dem Federspeicherbremsenanschluss (28) bereitstellt iund einem Steuereinlass umfasst, der mit dem Auslass des Select-High-Ventils (8) verbunden ist und wobei das Relaisventil (9) zur Modulierung einer Druckluftversorgung des Federspeicherbremsenanschlusses (28) in Abhängigkeit eines Luftdrucks am Steuereinlass betätigbar ist.

11. Vorrichtung nach Anspruch 10, weiter umfassend eine steuerbare Ventileinheit (7) mit einem mit dem ersten Anschluss (5a) des bistabilen Ventils (5) verbundenen ersten Anschluss, mit einem mit der Drucksenke (20) verbundenen zweiten Anschluss, mit einem mit dem dritten Anschluss (5c) des bistabilen Ventils (5) verbundenen dritten Anschluss und mit einem mit der Anhängersteuerleitung (29.2) verbundenen vierten Anschluss,
wobei die steuerbare Ventileinheit (7) in einer ersten Betriebsart zur Bereitstellung eines Luftdrucks an der Anhängersteuerleitung (29.2) betätigbar ist, welcher der höhere von einem Luftdruck am ersten Anschluss (5a) und einem Luftdruck am dritten Anschluss (5c) ist, und in einer zweiten Betriebsart zur Bereitstellung des Luftdrucks des dritten Anschlusses (5c) des bistabilen Ventils (5) an die Anhängersteuerleitung (29.2) betätigbar ist, unabhängig vom Luftdruck am ersten Anschluss (5a) des bistabilen Ventils (5), wobei die Steuereinheit (10) zur Steuerung der ersten und der zweiten Betriebsart ausgelegt ist.

12. Vorrichtung nach einem der vorhergehenden Ansprüche, weiter umfassend mindestens eine Drucksensoreinheit (30), wobei die mindestens eine Drucksensoreinheit (30) zur Messung eines Drucks am ersten Anschluss (5a) des bistabilen Ventils (5) und/oder zur Messung eines Drucks am zweiten Anschluss der Relaisventileinheit (9) betätigbar ist.

13. Vorrichtung nach einem der vorhergehenden Ansprüche, wobei das bistabile Ventil (5) und/oder das bistabile Betriebsartwählventil (3g) eines der folgenden Ventile ist/sind: ein elektromagnetisch gesteuertes Ventil, ein elektromechanisch gesteuertes Ventil und ein pneumatisch gesteuertes Ventil, wobei die Steuereinheit (10) zur Steuerung des bistabile Ventils (5) und/oder des bistabilen Betriebsartwählventils (3g) ausgelegt ist.

14. Feststellbremsanlage eines Nutzfahrzeugs mit einer Vorrichtung nach einem der vorhergehenden Ansprüche.

## Revendications

1. Système de commande d'un actionnement du frein de stationnement pneumatique d'un véhicule pouvant fonctionner pour remorquer une remorque, le système comprenant :
un raccord (1) d'alimentation en pression, pour fournir de l'air comprimé ;
une ligne (28) de commande, configurée pour fournir de l'air comprimé pour des actionneurs de frein à ressort du véhicule ;
une ligne (29.2) de commande de remorque, configurée pour fournir de l'air comprimé pour une unité de freinage de remorque du véhicule ;
une unité (10) de commande, configurée pour fournir un signal de fonctionnement autonome indiquant un mode de fonctionnement autonome souhaité du véhicule ;
une soupape (5) bistable, ayant un premier raccord (5a), un deuxième raccord (5b) et un troisième raccord (5c), le troisième raccord (5c) pouvant être relié à des actionneurs (28) de frein de stationnement et à la ligne (29.2) de commande de la remorque, la soupape (5) bistable pouvant être mise dans une première position (51) stable où le premier raccord (5a) est relié au troisième raccord (5c) et dans une deuxième position (52) stable où le deuxième raccord (5b) est relié au troisième raccord (5c), **caractérisé par**
une unité (3) de soupape adjointe à la soupape (5) bistable, à un puits (20) de pression et au raccord (1) d'alimentation en pression, et configurée pour recevoir le signal de fonctionnement autonome, l'unité (3) de soupape pouvant fonctionner :
- pour relier le premier raccord (5a) au raccord (1) d'alimentation en pression,
- pour relier le deuxième raccord (5b) à un puits (20) de pression, lorsqu'un signal de fonctionnement autonome n'est pas reçu et
- après réception du signal de fonctionnement autonome, pour interrompre la liaison entre le deuxième raccord (5b) et le puits (20) de pression.

2. Système suivant la revendication 1, dans lequel l'unité (3) de soupape comprend une soupape (3c) d'activation, ayant un premier raccord relié au raccord (1) d'alimentation en pression, un deuxième raccord relié au puits (20) de pression et un troisième raccord relié au deuxième raccord (5b) de la soupape (5) bistable,
la soupape (3c) d'activation pouvant fonctionner pour relier son troisième raccord à son deuxième raccord, lorsqu'un signal de fonctionnement autonome n'est pas reçu et, après réception du signal de fonctionnement autonome, pour relier son premier raccord à son troisième raccord.

3. Système suivant la revendication 1, dans lequel l'unité (3) de soupape comprend une soupape (3c) d'activation, montée entre le deuxième raccord (5b) de la soupape (5) bistable et le puits (20) de pression,
la soupape (3c) d'activation pouvant fonctionner pour relier le puits (20) de pression au deuxième raccord (5b) de la soupape (5) bistable, lorsqu'un signal de fonctionnement autonome n'est pas reçu et, après réception du signal de fonctionnement autonome, pour faire cesser la liaison entre le deuxième raccord (5b) de la soupape (5) bistable et le puits (20) de pression.

4. Système suivant la revendication 3, dans lequel l'unité (3) de soupape comprend, en outre, une soupape (3d) d'alimentation en pression, montée entre le deuxième raccord (5b) de la soupape (5) bistable et le raccord (1) d'alimentation en pression,
la soupape (3d) d'alimentation pouvant fonctionner pour, après réception du signal de fonctionnement autonome, relier le raccor'd (1) d'alimentation en pression au deuxième raccord (5b) et, lorsqu'un signal de fonctionnement autonome n'est pas reçu, faire cesser la liaison entre le deuxième raccord (5b) de la soupape (5) bistable et le raccord (1) d'alimentation en pression.

5. Système pour commander l'actionnement d'un frein de stationnement pneumatique d'un véhicule, qui convient pour remorquer une remorque, le système comprenant :
un raccord (1) d'alimentation en pression, pour fournir de l'air comprimé ;
une ligne (28) de commande, configurée pour fournir de l'air comprimé pour des actionneurs de frein à ressort du véhicule ;
une ligne (29.2) de commande de remorque, configurée pour fournir de l'air comprimé pour une unité de freinage de remorque du véhicule ;
une unité (10) de commande, configurée pour fournir un signal de fonctionnement autonome indiquant un mode de fonctionnement autonome souhaité du véhicule ;
une soupape (5) bistable, ayant un premier raccord (5a), un deuxième raccord (5b) et un troisième raccord (5c), le troisième raccord (5c) pouvant être relié à des actionneurs (28) de frein de stationnement et à la ligne (29.2) de commande de la remorque, la soupape (5) bistable pouvant être mise dans une première position (51) stable où le premier raccord (5a) est relié au troisième raccord (5c) et dans une deuxième position (52) stable où le deuxième raccord (5b) est relié au troisième raccord (5c), **caractérisé par**
une unité (3) de soupape adjointe à la soupape (5) bistable, à un puits (20) de pression et au raccord (1) d'alimentation en pression, et configurée pour recevoir le signal de fonctionnement autonome, l'unité (3) de soupape pouvant fonctionner :
- après réception du signal de fonctionnement autonome, pour établir une liaison entre le premier raccord (5a) de la soupape (5) bistable et le raccord (1) d'alimentation en pression et
- si un signal de fonctionnement autonome n'est pas reçu, pour relier le premier raccord (5a) au puits (20) de pression,
dans lequel l'unité (3) de soupape comprend une soupape (3g) de sélection de mode et une soupape (3c) d'activation reliées par l'intermédiaire d'une ligne (3f) de liaison,
la soupape (3g) de sélection de mode étant bistable et pouvant fonctionner pour, dans un premier mode où un signal de fonctionnement autonome n'est pas reçu, relier le premier raccord (5a) de la soupape de la soupape (5) bistable au raccord (1) d'alimentation en pression et, dans un deuxième mode où le signal de fonctionnement autonome est reçu, relier le premier raccord (5a) de la soupape (5) bistable à la ligne (3f) de liaison,
la soupape (3c) d'activation pouvant fonction pour, si un signal de fonctionnement autonome est reçu, relier la ligne (3f) de liaison au puits (20) de pression et, après réception du signal de fonctionnement autonome, faire cesser la liaison entre la ligne (31) de liaison et le puits (20) de pression.

6. Système suivant la revendication 5, dans lequel
la soupape (3c) d'activation peut fonctionner, en outre, pour, après réception du signal de fonctionnement autonome, relier le raccord (1) d'alimentation en pression (3f) de liaison.

7. Système suivant la revendication 6, dans lequel l'unité (3) de soupape comprend, en outre, une soupape (3e) d'alimentation en pression, montée entre la ligne (3f) de liaison et le raccord (1) d'alimentation en pression,
la soupape (3e) d'alimentation en pression pouvant fonctionner pour, après réception du signal de fonctionnement autonome, relier le raccord (1) d'alimentation en pression à la ligne (3f) de liaison et, lorsqu'un signal de fonctionnement autonome n'est pas reçu, faire cesser la liaison entre la ligne (3f) de liaison et le raccord (1) d'alimentation en pression.

8. Système suivant l'une des revendications précédentes, dans lequel l'unité (3) de soupape comprend, en outre, une soupape (3) de charge et une soupape (3b) de purge, l'unité (10) de commande pouvant fonctionner pour fournir un signal de purge pour purger la soupape (5) bistable,
la soupape (3) de charge pouvant fonctionner pour, après réception du signal de purge, faire cesser la liaison entre le raccord (1) d'alimentation en pression et le premier raccord (5a) de la soupape (5) bistable,
la soupape (3b) de purge pouvant fonctionner pour, après réception du signal de purge, relier le premier raccord (5a) de la soupape (5) bistable au puits (20) de pression.

9. Système suivant l'une des revendications précédentes, comprenant, en outre, une autre ligne (29.1) de commande de remorque, l'autre ligne (29.1) de commande de remorque pouvant être reliée au premier raccord (5a) de la soupape (5) bistable.

10. Système suivant l'une des revendications précédentes, comprenant, en outre, une soupape (8) de sélection haute, une unité (9) de soupape relais, un raccord (28) de frein à ressort pouvant être relié à un cylindre de frein à ressort du véhicule et un raccord (4.2) de frein de service pouvant être relié à un frein de service du véhicule,
la soupape (8) de sélection haute étant montée entre le troisième raccord (5c) de la soupape (5) bistable et le raccord (4.2) de frein de service et comprenant une sortie, la soupape (8) de sélection haute pouvant fonctionner pour fournir à la sortie de l'air comprimé sélectivement à partir du troisième raccord (5c) de la soupape (5) bistable et de l'air comprimé à partir du raccord (4.2) de frein de service, selon celui de l'air comprimé, qui a une pression d'air plus haute,
l'unité (9) de soupape relais fournissant une liaison pour de l'air entre le raccord (1) d'alimentation en pression et le raccord (28) de frein à ressort et comprenant une entrée de commande, l'entrée de commande étant reliée à la sortie de la soupape (8) de sélection haute, l'unité (9) de soupape de relais pouvant fonctionner pour moduler un pression de l'air fourni au raccord (28) de frein à ressort, en fonction de la pression de l'air présente à l'entrée de commande.

11. Système suivant la revendication 10, comprenant, en outre, une unité (7) de soupape pouvant être commandée et ayant un premier raccord relié au premier raccord (5a) de la soupape (5) bistable, un deuxième raccord relié au puits (20) de pression, un troisième raccord relié au troisième raccord (5c) de la soupape (5) bistable et un quatrième raccord relié à la ligne (29.2) de commande de la remorque,
l'unité (7) de soupape pouvant être commandée pouvant fonctionner suivant un premier mode pour fournir une pression d'air à la ligne (29.2) de commande de la remorque, qui est plus grande qu'une pression d'air au premier raccord (5a) et qu'une pression d'air au troisième raccord (5c) et, suivant un deuxième mode de fonctionnement, pour fournir la pression d'air du troisième raccord (5c) de la soupape (5) bistable à la ligne (29.2) de commande de la remorque, indépendamment de la pression d'air du premier raccord (5a) de la soupape (5) bistable, l'unité (10) de commande étant configurée pour commander le premier mode et le deuxième mode.

12. Système suivant l'une des revendications précédentes, comprenant, en outre, au moins une unité (30) formant capteur de pression, la au moins une unité (30) formant capteur de pression pouvant fonctionner pour mesurer une pression au premier raccord (5a) de la soupape (5) bistable et/ou pour mesurer une pression au deuxième raccord de l'unité (9) de soupape relais.

13. Système suivant l'une des revendications précédentes, dans lequel la soupape (5) bistable et/ou la soupape (3g) bistable de sélection de mode sont l'une des suivantes : une soupape commandée électromagnétiquement, une soupape commandée électromécaniquement et une soupape commandée pneumatiquement, l'unité (10) de commande étant configurée pour commander la soupape (5) bistable et/ou la soupape (3g) de sélection de mode.

14. Système de frein de stationnement d'un véhicule industriel ayant un système suivant l'une des revendications précédentes.
